(19) Europäisches Patentamt
European Patent Office
Office européen des brevets

(11) **EP 2 409 049 B1**

(12) **EUROPÄISCHE PATENTSCHRIFT**

(45) Veröffentlichungstag und Bekanntmachung des Hinweises auf die Patenterteilung:
**12.03.2014 Patentblatt 2014/11**

(21) Anmeldenummer: **10710228.7**

(22) Anmeldetag: **19.03.2010**

(51) Int Cl.:
**F16D 55/38** *(2006.01)* **F16D 65/18** *(2006.01)*

(86) Internationale Anmeldenummer:
**PCT/EP2010/001739**

(87) Internationale Veröffentlichungsnummer:
**WO 2010/105840 (23.09.2010 Gazette 2010/38)**

(54) **NASS LAUFENDE LAMELLENBREMSE**

WET-RUNNING MULTI-DISC BRAKE

FREIN IMMERGÉ À DISQUES MULTIPLES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **19.03.2009 DE 102009013894**

(43) Veröffentlichungstag der Anmeldung:
**25.01.2012 Patentblatt 2012/04**

(73) Patentinhaber: **KNORR-BREMSE Systeme für Nutzfahrzeuge GmbH**
**80809 München (DE)**

(72) Erfinder:
• **BAUMGARTNER, Johann**
**85368 Moosburg (DE)**
• **PERICEVIC, Aleksandar**
**80636 München (DE)**
• **GRUBER, Robert**
**83539 Pfaffing (DE)**
• **GEISSLER, Steffen**
**63512 Hainburg (DE)**

(74) Vertreter: **Mattusch, Gundula**
**Knorr-Bremse AG**
**Moosacherstrasse 80**
**80809 München (DE)**

(56) Entgegenhaltungen:
**EP-B1- 0 530 155    GB-A- 2 034 834**
**US-A- 2 938 607    US-A- 5 390 986**

**EP 2 409 049 B1**

**Beschreibung**

Die Erfindung betrifft eine nass laufende Lamellenbremse nach dem Oberbegriff des Anspruchs 1.

Nass laufende Lamellenbremsen bieten gegenüber trocken laufenden Bremsen, beispielsweise Scheibenbremsen, wie sie bislang überwiegend in Straßenfahrzeugen, insbesondere in schweren Nutzfahrzeugen wie Straßen-Lkws und Omnibussen, zum Einsatz kommen, Vorteile in Bezug auf Robustheit, Standzeit der Bremsbeläge und Umweltbelastung.

Diese trocken laufenden Reibungsbremsen unterliegen einem relativ hohen Verschleiß und erzeugen einen Bremsenabrieb, der zu einer nicht unerheblichen Staubbelastung, insbesondere Feinstaubbelastung der Umwelt beiträgt.

Darüber hinaus erfordert der Bremsbelag-Verschleiß entsprechende Wartungsarbeiten, die zusätzliche Betriebskosten verursachen.

Nass laufende Lamellenbremsen hingegen kommen bislang vornehmlich in Spezial-Lkws, schweren Baumaschinen, Traktoren oder dergleichen zum Einsatz, wobei sie sehr verschleißarm sind und auf einem niedrigen Temperaturniveau betrieben werden.

Die Betätigung der nass laufenden Bremsen (US 5 390 986 A) erfolgt üblicherweise hydraulisch, während trocken laufende Mehrscheibenbremsen (US 2 938 607 A), die ebenfalls beispielsweise in den genannten Spezial-Lkws Verwendung finden, mechanisch betätigt werden, z.B. pneumatisch.

Zur Reduzierung der Betätigungskraft sind bei diesen trocken laufenden Lamellenbremsen Selbstverstärkungseinrichtungen vorgesehen, die einen Betätigungsring mit einseitig sich in Drehrichtung der Rotorlamellen erstreckenden Rampen aufweisen. Über diesen Betätigungsring wird einerseits die Zuspannkraft übertragen und andererseits eine Selbstverstärkung erzeugt.

Allerdings muss die Zuspanneinrichtung drehrichtungsabhängig betätigt werden, was bei einer Druckluftbetätigung zum Beispiel mittels zweier Betätigungszylinder oder einem Umschaltgetriebe und einer Drehrichtungserkennung sowie einer entsprechend aufwendigen Steuerung möglich wäre. Allerdings steht eine solche Konzeption allein aus Kostengründen einem großvolumigen Einsatz entgegen.

Darüber hinaus ergeben sich auch im Betrieb bei einem Einsatz in einem Straßenfahrzeug erhebliche Probleme, beispielsweise wenn das entsprechende Fahrzeug aus einer Bergfahrt abgebremst wird.

Die Betriebsbremsung erfolgt hierbei bis zum Stillstand in Vorwärtsfahrtrichtung. Die nachfolgende Haltewirkung muss jedoch entsprechend der Richtung des Hangabtriebs in Rückwärtsfahrtrichtung aufgebracht werden. In der Konsequenz bedeutet dies eine stark reduzierte Brems- bzw. Haltewirkung in Rückwärtsfahrtrichtung oder bei einer Ausbildung der Rampen in beide Fahrtrichtungen ein vorübergehend nicht gebremster Zustand des Fahrzeugs bei einem Wechsel der Vorwärts- zur Rückwärtsbremsrichtung.

In der gattungsgemässe EP 0 530 155 B1 ist eine nass laufende Lamellenbremse geoffenbart, die einen über eine beidseitig verdrehbare Zuspanneinrichtung ebenfalls in beide Drehrichtungen der Rotorlamellen begrenzt verdrehbaren Betätigungsring aufweist, , wobei dieser Betätigungsring mit Rampen versehen ist, mit gegenläufig in Drehrichtung sich erstreckenden Rampenflächen, wobei in den Rampen Kugeln gehalten sind, die andererseits in Druckringe eingreifen, die an Rotorlamellen anpressbar sind.

Die bekannten mechanischen Rampenbetätigungssysteme erfüllen nicht die hohen Anforderungen an moderne Nutzfahrzeugbremsanlagen.

Der Erfindung liegt die Aufgabe zugrunde, eine nass laufende Lamellenbremse der gattungsgemäßen Art so weiterzuentwickeln, dass ihre Verwendungsfähigkeit verbessert wird und dass sie insbesondere in Straßenfahrzeugen einsetzbar ist.

Diese Aufgabe wird durch eine nass laufende Lamellenbremse mit den Merkmalen des Anspruchs 1 gelöst.

Erstmals ist somit die Zuspanneinrichtung mechanisch betätigbar bei gleichzeitiger Selbstverstärkung und zwar in beide Drehrichtungen der Rotorlamellen.

Zunächst einmal zeichnet sich die Erfindung durch ihre äußerst einfache und damit robuste Bauweise aus, da auf zusätzliche Maßnahmen, wie den zum Stand der Technik bereits genannten zwei Betätigungszylindern bei einer pneumatisch betätigbaren Zuspanneinrichtung oder einer Drehrichtungserkennung und damit verbundenen Steuerung verzichtet werden kann.

Somit können die Vorteile einer mechanisch betätigbaren Zuspanneinrichtung bei einer nass laufenden Lamellenbremse genutzt werden, ohne Einschränkung des Bremsverhaltens bei einer Rückwärtsfahrt.

Durch die Selbstverstärkungseinrichtung kann eine hohe Spannkraft bei niedrigem Bedarf an Betätigungsenergie erreicht werden, die, wie sich gezeigt hat, lediglich 30 bis 50 % des Bedarfs einer konventionellen Bremsbetätigung beträgt.

Dies führt zu einer Verringerung der notwendigen Reibkontakte und damit zu einer Reduzierung der Baulänge der gesamten Bremse und Minimierung der Abmessungen der Betätigungskomponenten wie Bremszylinder, Speicherfeder etc., was eine wesentliche Montageerleichterung in den sehr beengten Einbauverhältnissen, insbesondere bei einem Einbau im Bereich der Vorderachse erleichtert.

Die Betätigungseinheit weist einen Betätigungsring auf, der über eine eingeformte Rampe bei Betätigung der Zuspanneinrichtung, d.h., eines Aktuators, axial verstellbar ist. Dabei ist die Rampe in eine Drehrichtung der Rotorlamellen einseitig ausgerichtet, entsprechend der Betätigungsrichtung des Aktuators.

Der separate Druckring hingegen weist zwei gegenläufig in beide Drehrichtungen der Rotorlamellen ausgerichtete Rampenpaare auf, die mit einem Rollkörper korrespondieren, der in einem Bremsengehäuse abrollbar, jedoch ortsfest gehalten ist.

Der Betätigungsring stützt sich im Bereich seiner jeweiligen Rampe ebenfalls an einem Rollkörper ab, der in einer Vertiefung des Bremsengehäuses gelagert ist.

Die auf diese Weise realisierte Parallelschaltung von Betätigung einerseits und Selbstverstärkung andererseits ermöglicht eine selbsttätige Drehrichtungsanpassung der Selbstverstärkung ohne Bremskraftunterbrechung sowie eine voneinander unabhängige Dimensionierung der Betätigungs- und Verstärkungsrampe. Der Betätigungsring und der Druckring sind parallel zueinander angeordnet und liegen wälzlagergestützt aneinander.

Damit kann der Betätigungsring seine Zustellbewegung und damit die im Falle einer Bremsung erzeugte Spannkraft unabhängig von einer Drehbewegung des Druckringes in diesen einleiten.

Der Druckring ist mit einer Reibfläche versehen, die bei einer Zuspannung mittels des Betätigungsringes gegen eine zugeordnete, eine Bremsscheibe bildende Rotorlamelle gepresst wird.

Dabei reicht bereits eine vor dem Zusammendrücken des Bremsscheiben- und Lamellenpaketes und damit vor einem Spannkraftaufbau wirkende Rückstellkraft, die durch zwischen den Statorlamellen und dem Druckring angeordnete Rückstellfedern erzeugt wird, aus, um am Druckring eine in Umfangsrichtung wirkende Reibkraft zu erzeugen, die den Druckring so weit verdreht, dass dessen Rampen im richtigen Drehsinn aktiviert werden.

Bei einer weiteren Betätigung der Bremse erfolgt nun der Spannkraftaufbau, wobei die von den Rampen des Betätigungsringes einerseits und des Druckrings andererseits erzeugte Kraft im Druckring zusammengeführt und als Gesamtspannkraft auf das Bremsscheiben-/Lamellenpaket einwirkt.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:

Figur 1    einen Teilausschnitt einer erfindungsgemäßen Lamellenbremse in einer schematischen Schnittdarstellung

Figur 2    die Kraftverhältnisse an einer Rampe des Druckringes

Figur 3    die Kraftverhältnisse an einer Rampe des Betätigungsringes.

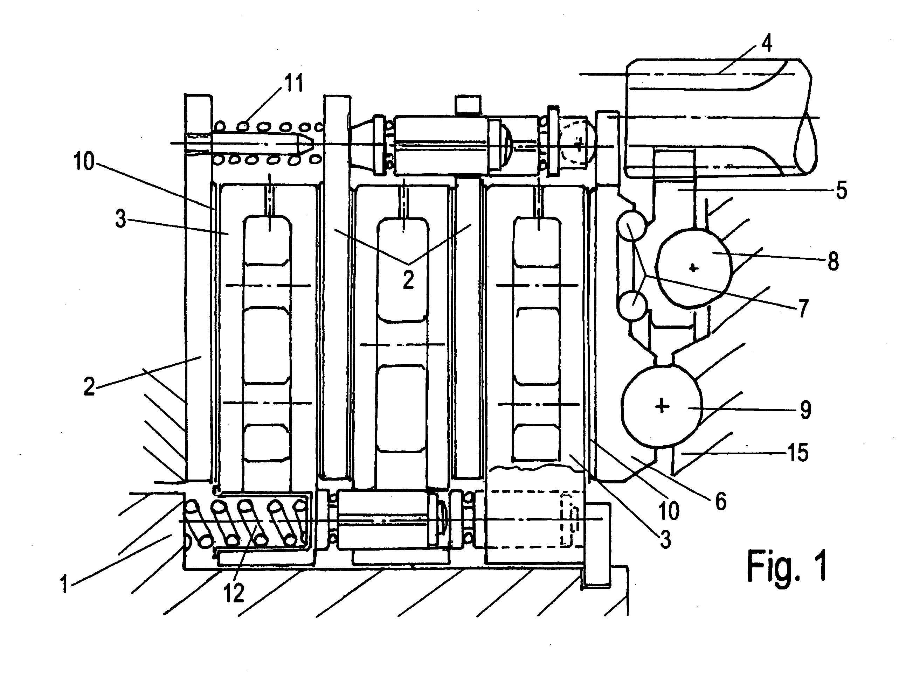

In der Figur 1 ist schematisch eine Hälfte einer nass laufenden Lamellenbremse entsprechend der Erfindung dargestellt. Diese weist parallel und abständig zueinander angeordnete, verdrehfest gehaltene Statorlamellen 2 auf, zwischen denen jeweils eine drehbare, im Sinne einer innen belüfteten Bremsscheibe ausgebildete Rotorlamelle 3 positioniert ist, wobei bei einer Bremsung die sich radial erstreckenden Statorlamellen 2 und Rotorlamellen 3 mittels einer Zuspanneinrichtung, von der ein Antriebsritzel 4 dargestellt ist, unter Überwindung eines Lüftspiels gegeneinander pressbar sind.

Die Rotorlamellen 3 sind auf einer Achse 1 eines Fahrzeuges befestigt und mittels Rückstellfedern 12 axial federbelastet.

Zwischen den Statorlamellen 2 sind ebenfalls Rückstellfedern vorgesehen, die mit dem Bezugszeichen 11 versehen sind.

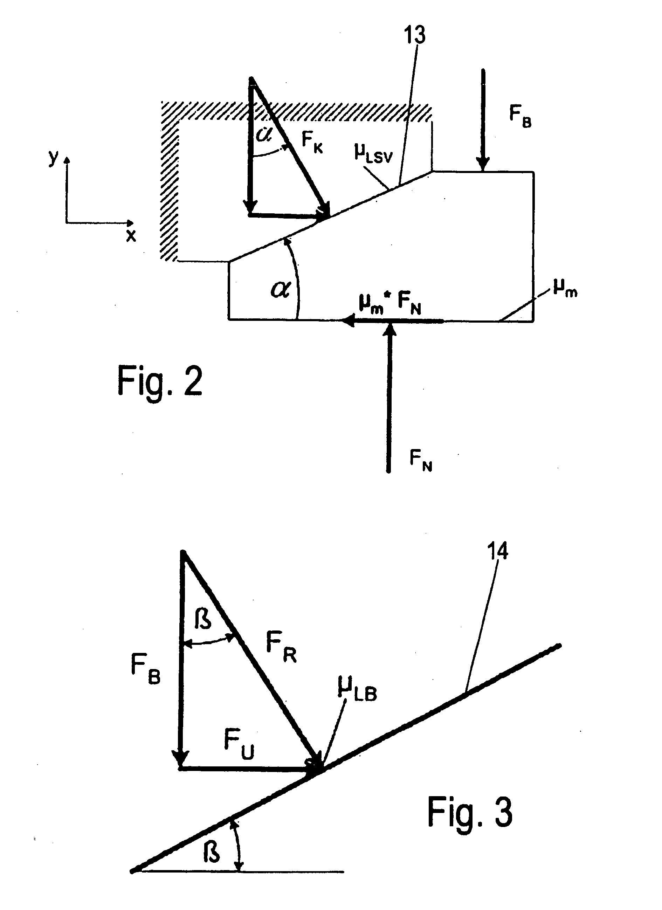

Mit dem Antriebsritzel 4 steht ein Betätigungsring 5 in Eingriff, der sich mit einem Rollkörper 8 an einem Bremsengehäuse 15 abstützt und der in dem dem Rollkörper 8 zugeordneten Bereich eine Rampe 14 (Figur 3) aufweist, die entgegen der Drehrichtung des Antriebsritzels 4 und damit des Betätigungsringes 5 ansteigt.

Bei Betätigung der Zuspanneinrichtung wird über das Antriebsritzel 4 der Betätigungsring 5 verdreht, wobei durch den Rampenanstieg im Zusammenspiel mit dem in einer Kalotte des Bremsengehäuses 15 einliegenden Rollkörpers 8 der Betätigungsring 5 axial in Richtung der Rotorlamellen 2 verschoben wird.

Zwischen einer zugewandten Rotorlamelle 3 und dem Betätigungsring 5 ist ein Druckring 6 positioniert, der auf der der Rotorlamelle 3 zugewandten Seite mit einer Reibfläche 10 versehen ist, während er auf der gegenüberliegenden Seite über eine als Axiallager ausgebildete Wälzlagerung 7 am Betätigungsring 5 anliegt.

Auf dieser Seite stützt sich der Druckring 6 an einem Rollkörper 9 ab, der gleichfalls im Bremsengehäuse 15 einliegt, wobei im Anlagebereich des Rollkörpers 9 gegenläufig in beide Drehrichtungen der Rotorlamellen 3 ausgerichtete Rampenpaare vorgesehen sind.

Unabhängig von der Drehrichtung der Achse 1 und damit der Rotorlamellen 3, entsprechend einer Vorwärts- oder Rückwärtsfahrt, kommt der Druckring 6 als Selbstverstärkung zur Wirkung, während der Betätigungsring 5 lediglich in eine Richtung dreht. Bei einer Kontaktierung des Druckringes 6 bzw. dessen Reibfläche 10 mit der zugeordneten Rotorlamelle 3 durch Anpressen mittels des Betätigungsringes 5 wird der Druckring 6 entsprechend der Drehrichtung der Rotorlamelle 3 mit verdreht und durch die jeweilige Rampe 13 (Figur 2) gegen die Rotorlamelle 3 gepresst.

Unter Bezugnahme auf die Figuren 2 und 3 ist nachfolgend ein Auslegungsbeispiel der beschriebenen Lamellenbremse wiedergegeben.

| Bezeichnung | Kurzzeichen | Wert | Einheit |
|---|---|---|---|
| Erforderliches Bremsmoment | $M_{Br}$ | 23000 | Nm |
| Mittlerer Reibradius | $r_m$ | 167 | mm |
| Anzahl der Reibkontakte | z | 6 | - |
| Mittlerer Reibwert zwischen Belaglamellen und Bremsscheiben | $\mu_m$ | 0,125 | - |
| Keilwinkel | $\alpha$ | 11,4 | ° |
| Betätigungsradius des Keilsystems | $r_{sv}$ | 150 | mm |
| Lagerreibung in Selbstverstärkungsrampe | $\mu_{LSV}$ | 0,05 | - |
| Resultierender Reibwinkel der Selbstverstärkungsrampe | Y | 2,86 | ° |
| Rampenwinkel des Betätigungsringes | $\beta$ | 5 | ° |
| Wirkradius des Betätigungsringes | $r_B$ | 167 | mm |
| Lagerreibung in Betätigungsrampe | $\mu_{LB}$ | 0,05 | - |
| Resultierender Reibwinkel der Betätigungsrampe | $\delta$ | 2,86 | ° |
| Prozentualer Zuspannkraftverlust durch Scheiben- und Lamellenführung | F% | 5 | % |
| Wirkungsgrad der Stirnradstufe | $\eta$ | 97 | % |
| Wälzkreisradius Betätigungsrampe | $r_{W2}$ | 180 | mm |
| Wälzkreisradius Antriebsritzel | $r_{W1}$ | 27 | mm |

Aus dem erforderlichen Bremsmoment lässt sich die notwendige Zuspannkraft $F_N$ ermitteln:

$$F_N^\bullet = \frac{M_{Br}}{\mu_m \cdot r_m \cdot z} = \frac{23000 \cdot Nm}{0,125 \cdot 0,167 \cdot m \cdot 6} = 183633 \cdot N$$

Berücksichtigt man den prozentualen Spannkraftverlust, der durch Reibung in der Scheiben- und Lamellenführung (axiale Verschiebung) hervorgerufen wird, ergibt sich die Zuspannkraft zu:

$$F_N = F_N^\bullet \cdot (1 + F\%) = 183633 \cdot N \cdot 1,05 = 192814 \cdot N$$

Hieraus kann die erforderliche Zuspannkraft $F_B$ der Betätigungsrampe berechnet werden:

$$F_B = F_N \cdot \left(1 - \frac{\mu_m}{\tan(\alpha + \gamma)}\right) = 192814 \cdot N \cdot \left(1 - \frac{0,125}{\tan(11,4° + 2,86°)}\right) = 97983 \cdot N$$

Um diese Kraft auf der Betätigungsrampe abstützen zu können, ist eine Umfangskraft von $F_U = F_B \cdot \tan(\beta + \delta) = 97983 \cdot N \cdot \tan(5° + 2,86°) = 13527 \cdot N$ erforderlich.

Die Umfangskraft auf die Verzahnung berechnet sich wie folgt:

$$F_{RW2} = F_{RW1} = F_U \cdot \frac{r_B}{r_{w2}} = 13527 \cdot N \cdot \frac{0,150 \cdot m}{0,180 \cdot m} = 11273 \cdot N$$

Schließlich kann, unter Berücksichtigung des Wirkungsgrades der Stirnradstufe, das erforderliche Betätigungsmoment berechnet werden

$$M_{RW} = \frac{F_{RW1} \cdot r_{W1}}{\eta} = \frac{11273 \cdot N \cdot 0,027 \cdot m}{0,97} = 314 \cdot N \cdot m$$

**Patentansprüche**

1. Nass laufende Lamellenbremse, mit parallel und abständig zueinander angeordneten, verdrehfest gehaltenen Statorlamellen (2), zwischen denen jeweils eine drehbare Rotorlamelle (3) positioniert ist, wobei bei einer Bremsung die sich radial erstreckenden Statorlamellen (2) und Rotorlamellen (3) mittels einer Zuspanneinrichtung unter Überwindung eines Lüftspiels gegeneinander pressbar sind, **dadurch gekennzeichnet, dass** die Zuspanneinrichtung mechanisch betätigbar ist und über eine Betätigungseinheit an eine Selbstverstärkungseinrichtung angreift, die einen Druckring (6) aufweist, der bei einer Bremsung, unabhängig von der Drehrichtung der Rotorlamellen (3) zu diesen hin drückbar ist, wobei die Betätigungseinheit mit einem Betätigungsring (5) versehen ist, der in eine Drehrichtung der Rotorlamellen (3) sich erstreckende Rampen (14) aufweist und an dem sich der mit gegenläufig in beide Drehrichtungen der Rotorlamellen (3) ausgerichteten Rampenpaaren (13) versehene Druckring (6) abstützt.

2. Nass laufende Lamellenbremse nach Anspruch 1, **dadurch gekennzeichnet, dass** sich der Druckring (6) und der Betätigungsring (5) jeweils mittels Rollkörpern (8, 9) an einem Bremsengehäuse (15) abstützen, wobei jeder Rampe (14) bzw. jedem Rampenpaar (13) ein Rollkörper (8, 9) zugeordnet ist.

3. Nass laufende Lamellenbremse nach Anspruch 1 oder 2, **dadurch gekennzeichnet, dass** der Druckring (6) auf seiner der zugeordneten Rotorlamelle (3) zugewandten Seite eine Reibfläche (10) aufweist.

4. Nass laufende Lamellenbremse nach einem der vorhergehenden Ansprüche, **dadurch gekennzeichnet, dass** sich der Druckring (6) mittels einer Wälzlagerung (7) am Betätigungsring (5) abstützt.

5. Nass laufende Lamellenbremse nach einem der vorhergehenden Ansprüche, **dadurch gekennzeichnet, dass** die Wälzlagerung (7) als Axiallager ausgebildet ist.

6. Nass laufende Lamellenbremse nach einem der vorhergehenden Ansprüche, **dadurch gekennzeichnet, dass** der Betätigungsring (5) eine Stirnverzahnung aufweist, die mit einer Verzahnung eines Antriebsritzels (4) der Zuspanneinrichtung kämmt.

7. Nass laufende Lamellenbremse nach einem der vorhergehenden Ansprüche, **dadurch gekennzeichnet, dass** die Zuspanneinrichtung pneumatisch betätigbar ist.

8. Nass laufende Lamellenbremse nach einem der vorhergehenden Ansprüche, **dadurch gekennzeichnet, dass** zwischen den Rotorlamellen (3) Rückstellfedern (12) angeordnet sind.

9. Nass laufende Lamellenbremse nach einem der vorhergehenden Ansprüche, **dadurch gekennzeichnet, dass** zwischen den Statorlamellen (2) einerseits und dem Druckring (6) Rückstellfedern (11) angeordnet sind.

**Claims**

1. Wet-running multi-disc brake, comprising stator discs (2) which are arranged parallel to and at a distance from one another, which are held non-rotatably, and between which in each case one rotatable rotor disc (3) is positioned, it being possible, during a braking operation, for the radially extending stator discs (2) and rotor discs (3) to be pressed against one another by means of a brake application device, with a clearance being overcome, **characterised in that** the brake application device can be actuated mechanically and acts via an actuating unit on a self-energising device which has a thrust ring (6) which, during a braking operation, can be pressed toward the rotor discs (3) independently of the rotational direction of the latter, wherein the actuating unit is provided with an actuating ring (5) which has ramps (14) which extend in a rotational direction of the rotor discs (3) and on which the thrust ring (6), which has ramp pairs (13) which are oriented in opposite directions in both rotational directions of the rotor discs (3), is supported.

2. Wet-running multi-disc brake according to claim 1, **characterised in that** the thrust ring (6) and the actuating ring (5) are supported on a brake housing (15) in each case by means of rolling bodies (8, 9), each ramp (14) or each ramp pair (13) being assigned a rolling body (8, 9).

3. Wet-running multi-disc brake according to claim 1 or 2, **characterised in that** the thrust ring (6) has a friction face (10) on its side which faces the associated rotor disc (3).

4. Wet-running multi-disc brake according to any of the preceding claims, **characterised in that** the thrust ring (6) is supported on the actuating ring (5) by means of an antifriction bearing (7).

5. Wet-running multi-disc brake according to any of the preceding claims, **characterised in that** the antifriction bearing (7) is configured as an axial bearing.

6. Wet-running multi-disc brake according to any of the preceding claims, **characterised in that** the actuating ring (5) has a spur toothing system which meshes with a toothing system of a drive pinion (4) of the brake application device.

7. Wet-running multi-disc brake according to any of the preceding claims, **characterised in that** the brake application device can be actuated pneumatically.

8. Wet-running multi-disc brake according to any of the preceding claims, **characterised in that** restoring springs (12) are arranged between the rotor discs (3).

9. Wet-running multi-disc brake according to any of the preceding claims, **characterised in that** restoring springs (12) are arranged between the stator discs (2) on one side and the thrust ring (6).

**Revendications**

1. Frein immergé à disques multiples, comprenant des disques (2) statoriques parallèles, disposés à distance les uns des autres maintenus à l'épreuve de la torsion et entre lesquels est placé respectivement un disque (3) rotorique tournant, dans lequel, lors d'un freinage, les disques (2) statoriques et les disques (3) rotoriques s'étendant radialement peuvent être pressés les uns contre les autres au moyen d'un dispositif de serrage en surmontant un espace d'air, **caractérisé en ce que** le dispositif de serrage peut être actionné mécaniquement et attaque, par une unité d'actionnement, un dispositif d'auto amplification qui a un cône (6) de serrage qui, lors d'un freinage, peut, indépendamment du sens de rotation des disques (3) rotoriques, être poussé vers ceux-ci, l'unité d'actionnement étant pourvue d'un anneau (5) d'actionnement, qui a des rampes (14) s'étendant dans un sens de rotation des disques (3) rotoriques et sur lequel s'appuie le cône (6) de serrage pourvu de paires (13) de rampes dirigées en sens contraire dans les deux sens de rotation des disques (3) rotoriques.

2. Frein immergé à disques multiples suivant la revendication 1, **caractérisé en ce que** le cône (6) de serrage et l'anneau (5) d'actionnement s'appuient respectivement au moyen de galets (8, 9), un galet (8, 9) étant associé à chaque rampe (14) ou à chaque paire de rampes (13).

3. Frein immergé à disques multiples suivant la revendication 1 ou 2, **caractérisé en ce que** le cône (6) de serrage à une surface (10) de frottement du côté tourné vers le disque (3) rotorique associé.

4. Frein immergé à disques multiples suivant l'une des revendications précédentes, **caractérisé en ce que** le cône (6) de serrage s'appuie sur l'anneau (5) d'actionnement au moyen d'un palier (7) à roulement.

5. Frein immergé à disques multiples suivant l'une des revendications précédentes, **caractérisé en ce que** le palier (7) à roulement est constitué sous la forme d'un palier axial.

6. Frein immergé à disques multiples suivant l'une des revendications précédentes, **caractérisé en ce que** l'anneau (5) d'actionnement à une denture droite, qui engrène avec une denture d'un pignon (4) d'entraînement du dispositif de serrage.

7. Frein immergé à disques multiples suivant l'une des revendications précédentes, **caractérisé en ce que** le dispositif de serrage peut être actionné pneumatiquement.

8. Frein immergé à disques multiples suivant l'une des revendications précédentes, **caractérisé en ce que** des ressorts (12) de rappel sont montés entre les disques (3) rotoriques.

9. Frein immergé à disques multiples suivant l'une des revendications précédentes, **caractérisé en ce que** des ressorts (11) de rappel sont montés entre les disques (2) rotoriques d'une part et le cône (6) de serrage.

Fig. 1

Fig. 2

Fig. 3

**IN DER BESCHREIBUNG AUFGEFÜHRTE DOKUMENTE**

**In der Beschreibung aufgeführte Patentdokumente**

- US 5390986 A
- US 2938607 A
- EP 0530155 B1